# EUROPEAN PATENT SPECIFICATION

(11) **EP 3 871 993 B1**
(45) Date of publication and mention of the grant of the patent: **09.08.2023**
(21) Application number: 20305200.6
(22) Date of filing: 28.02.2020
(51) Int. Cl.: B65D 25/42, B65D 47/12, H02G 15/00

(54) **DIRECT LOCKING INJECTION ADAPTER AND INJECTION VALVE**
DIREKTVERRIEGELUNGSEINSPRITZADAPTER UND EINSPRITZVENTIL
ADAPTATEUR D'INJECTION À VERROUILLAGE DIRECT ET SOUPAPE D'INJECTION

(43) Date of publication of application: 01.09.2021
(73) Proprietor: Tyco Electronics-Simel, 21220 Gevrey Chambertin (FR); Tyco Electronics Raychem GmbH, 85521 Ottobrunn (DE)
(72) Inventor: PELTIER, Bruno, 21850 St Apollinaire (FR); PETRIGNET, Laurent, 21220 Gevrey-Chambertin (FR); KUNZMANN, Jens-Peter, 13088 Berlin (DE)
(74) Representative: Grünecker Patent- und Rechtsanwälte PartG mbB

(56) References cited:
- EP-A1- 2 645 500
- EP-A1- 3 369 699
- EP-B1- 2 645 500
- WO-A1-2014/126473
- FR-A1- 3 017 310

## Description

### TECHNICAL FIELD OF THE INVENTION

The present invention relates to injection valves and/or injection devices that are connectable to a spout or nozzle of a disposable fluid container or bag to facilitate the injection of fluid from the disposable container into a sealing compartment or medium, and particularly, for injecting viscous fluids, such as resin, for sealing or insulating electrical cable joints and connections.

### BACKGROUND OF THE INVENTION

Electrical cable joints and connections in underground networks are generally protected using resin, which allows to increase the lifetime of the cable connections by protecting them from outer moisture/water as well as mechanical constraints.

A conventional technique of applying resin to an electrical cable joint or connection lies in providing a rigid plastic box which is installed around the connection and filled (like a mould) with resin. However, this technique has the drawback of requiring a significant amount of resin, which is expensive and not environmental friendly.

Another known technique for sealing underground electrical cable connections/joints consists in wrapping a sealing film around the connection to be protected such as to create a box or envelope which fits perfectly with the shape of the connection, and therefore, minimize the quantity of resin needed. In order to fill such envelope with resin, it is in general required to use an injection valve. The injection valve is connected to an outlet of the resin bag and the resin is "injected" through the injection valve inside the envelope surrounding the cable joint by applying some pressure on the resin bag. The resin bag may then be disconnected from the injection valve when no longer needed.

Resin injection valves used for the purpose described above are known. For example, French patent publication FR 3 017 310 describes a device for injecting resin into the interstices of porous material(s) surrounding an electrical appliance to be protected such as to impregnate these porous materials in a sealed manner around said electrical appliance. This injection device comprises an injection pipe having: at a first end, connection means to an outlet orifice of an injection container supplying the product to be injected, and at a second end, a support plate surrounding the orifice the injection pipe and which is to be pressed on the surface of the porous material to be impregnated during the injection of the resin. The support plate is connected to the injection pipe by a part having a flared shape widening from the injection pipe towards this plate, in order to provide the injection product with a larger passage section in the supporting region that is in contact with the porous material than in the rest of the injection conduit. The injection valve may be connected to the nozzle of a resin bag via a ring provided at the first end of the injection pipe and which includes an internal screwing thread that cooperates with the existing screwing thread on the bag nozzle for fixating the injection valve to the nozzle. The connection of the injection valve to the resin bag involves at least two steps of inserting the injection pipe into the nozzle and fastening the connecting ring to the nozzle. Further, the manual rotation of the ring for connecting and disconnecting the resin bag from the injection valve is a cumbersome process and difficult to accomplish in situations where space around the injection valve is limited. Moreover, there is a risk that resin may be spilled from the resin bag during the screwing process.

Another type of a non-return valve for a resin injection system, especially for use in electrical cable joints, is described in European patent publication EP 2 645 500 B1. The inlet of the non-return valve includes a screwing thread in the inside wall that matches the external screwing thread already existing in the spout for screwing the bag cap so that the spout is inserted and fixed to the non-return valve inlet by screwing. However, this still presents the drawback of requiring multiple rotations of the spout and resin bag with respect to the non-return valve in order to insert and fixate the nozzle. The non-return valve also comprises a valve housing which includes an outlet for a fluid flowing through the valve, and a valve body which is held by the valve housing and is freely movable between a closed position, in which the outlet is substantially sealed or closed to fluid flow by the valve body, and an open position, in which the outlet is substantially open to fluid flow. However, as the non-return valve and valve body are provided as separate parts, the non-return valve requires in-site assembly and consequently, increases installation time and/or the possibility of the valve body being lost.

A further disposable and collapsible bag packaging and connector system is described in patent publication WO 2014/126473. The system includes a disposable and collapsible bag having a chamber that is filled or to be filled with a fluid product. The bag has a first connector for dispensing the product from the bag and which is permanently secured to the bag. The system includes a second connector having an internal channel for passage of the product and which is releasably connectable to the first connector. The first and second connectors form a bayonet connection. The first connector comprises a rotary valve member that upon rotation over an angle of the inserted connector relative to the other connector opens and closes the bag.

Nevertheless, a drawback common to the prior art injection valves and resin injection systems lies in requiring that the resin bag or a connecting component has to be rotated for securing the connection between the bag spout and the injection valve and the . Furthermore, the existing injection valve designs are based on several parts, which requires longer assembly and installation time. An additional limitation of many of the existing resin injection devices lies in the cross-section where the resin can flow being limited and in resin being spilled from the injections valve when the resin bag spout is disconnected.

Therefore, there is still a need for injection valves and/or injection adapters that can be easily connected to and disconnected from a disposable resin bag with a minimum of steps and relative movements between the injection valve and the spout of the resin bag and which facilitate injection of resin from the resin bag into the region to be sealed.

EP 3 369 699 A1 describes an adapter that comprises: a central body with a main axis and a fluid channel extending through, a sleeve arranged coaxially around the central body and which is movable in the direction of the main axis between a closing position and a dispensing position. An annular space is formed between the sleeve and a cap portion for reception of a spout of a second container. The adapter comprises at least one resilient finger arranged with one end to the central body and wherein the other end of the finger is provided with a hook-shaped end. The hook-shaped end extends into the annular space in the closed position of the sleeve and hooks with a protrusion arranged to the sleeve. In the dispensing position the hook-shaped end is positioned outside of the annular space.

FR 3 017 310 A1 describes a valve for resin injection. The device comprises an injection duct having: at a first end, connection means to an outlet orifice of an injection container supplying the product to be injected, and to a second end, a support plate surrounding the orifice of the injection duct to be pressed against the surface of the porous material to be impregnated during the injection of the resin.

EP 2 645 500 B1 describes a non-return valve for a resin injection system and a resin injection system comprising same.

### SUMMARY OF THE INVENTION

The present invention has been made in view of the shortcomings and disadvantages of the prior art, and an object thereof is to provide an injection adapter for a spout of a container of fluid used for sealing electrical cable joints having a minimum of assembly parts and that can be easily locked to and unlocked from the spout of the fluid container in a single step, even in conditions where the space around the cable joint to be sealed is limited. A further object of the invention is to provide an injection adapter and/or injection involved that minimizes the risk of resin spills after the envelope around the cable joint to be protected is filled and the resin bag is disconnected.

This object is solved by the subject matter of the independent claim 1. Advantageous embodiments of the present invention are subject matter of the dependent claims.

According to the present invention, it is provided an injection adapter for a spout of a fluid container used in sealing and/or insulation of electrical cable joints, the spout having an outer wall with at least one recess and a protrusion, the injection adapter comprising: a fluid conduit having an inlet neck with an inlet opening that is adapted to be inserted into the spout; one or more clipping members arranged on an outer perimeter of the fluid conduit and oriented with free ends towards the inlet neck that are adapted to lock the fluid conduit to the spout, wherein the free end of each clipping member is adapted to be deflected outwards in a radial direction when mechanical force is applied on said free end along a non-radial direction for unlocking the respective clipping member from the spout. The free end of each clipping member includes a locking protrusion and an unlocking protrusion that project radially towards the fluid conduit. The locking protrusion is adapted to snap into one of the at least one recess of the spout when the inlet neck is inserted into the spout. The unlocking protrusion is adapted to cooperate with said protrusion on the spout when the spout protrusion is brought into contact with the free end of the clipping member by a rotation movement of the spout relatively to the inlet neck inserted into the spout, thereby unlocking the clipping member from the spout.

According to a further development, the clipping member has an elongated body extending along the fluid conduit and which terminates with the respective free end at the side towards the inlet opening, the elongated body being adapted to be resiliently deflected under application of outward mechanical force at the respective free end.

According to a further development, the unlocking protrusion comprises an oblique face that is inclined with respect to a plane parallel to a longitudinal axis of the fluid conduit such as to cause the free end of the respective clipping member to be pushed radially outwards under application of mechanical force on said oblique face along a non-radial direction that is transverse to both the longitudinal direction and the radial direction.

In a further development, said unlocking protrusion has a shape that includes said oblique face, an upper side face and a lower side face which is inclined with respect to the upper side face such as to define an edge of the V-shaped indentation, wherein said oblique face is a triangular face oriented with respect to the upper side face and the lower side face such as to partially cut the edge defined by the upper side face and the lower side face; and/or wherein said free end further includes a blocking part located on an adjacent side of the unlocking protrusion and which projects inwards beyond the unlocking protrusion such as to come into contact with the spout protrusion during the rotation movement of the spout and to stop the spout rotation at a position at which the spout protrusion causes a maximum deflection on the clipping member to unclip the spout.

In a further development, said locking protrusion defines a shoulder that projects radially inwards and which is adapted to engage with the recess in the spout and to prevent removal of the inlet neck from the spout with a pull movement. In a further development, said locking protrusion includes a blocking side adapted to enter into contact with the spout protrusion during the rotation movement of the spout such as to stop rotation of the spout at a position at which the spout protrusion causes a maximum deflection on the clipping member to unclip the sprout.

In a further development, said locking protrusion further includes an upper side face (168d) which is inclined with respect to a plane transverse to a longitudinal axis (L) of the fluid conduit such as to cause the free end of the respective clipping member to be deflected outwards under application of mechanical force onto said upper side face (168d) along a direction parallel to said longitudinal axis (L).

In a further development, said locking protrusion further includes a lower side face (168) between the shoulder and the upper side face, the lower side face being inclined with respect to the upper adapted to hold the captive ball in the opened valve position when fluid is being injected from the inlet opening and to allow fluid to pass through the supporting legs, and an inward edge 694, proximate to the outlet opening 630, and adapted to hold the captive ball in the closed valve position when the captive ball is pressed against the inward edge 694 and the outlet opening by back-flow of fluid.The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** shows a perspective view of an injection adapter with an optional cap according to an embodiment of the present invention;
**Fig. 2** shows another perspective view of the injection adapter and cap of Fig. 1 together with a spout of a fluid container (not shown) to be connected to the injection adapter;
**Fig. 3** shows a perspective view of the injection adapter and the cap as shown in Fig. 1 and which are permanently attached to each other via a ribbon or cable according to a further embodiment of the present invention;
**Fig. 4** shows a perspective view of the injection adapter shown in Fig. 1 and a fluid container with respective spout shown in a state before being connected to the injection adapter;
**Fig. 5** is a side view of the injection adapter and the spout of the fluid container of Fig. 4 in a locked state, after pressing the spout against the injection adapter in the arrow direction;
**Fig. 6** shows a side view of the injection adapter and the spout of Fig. 5 after a rotation of the fluid container in the direction of the arrow for unlocking the spout from the injection valve;
**Fig. 7** is a side view of the injection adapter and the spout of Fig. 6 after the spout has been unlocked from the injection adapter and is being pulled away from the injection valve in the arrow direction for disposing the fluid container;
**Fig. 8** shows a perspective view of a double-featured protrusions at the free end of a clipping member of the injection adapters shown in Figs. 1 and 3; and
**Fig. 9** shows a side view of the injection adapter and the cap of Fig. 1, which are brought into a locked state by simply pressing the cap against the injection adapter with a linear movement along the arrow direction;
**Fig. 10** shows a further perspective view of the injection adapter and cap illustrated in Fig. 1;
**Fig. 11** is another perspective view of the injection adapter and cap of Fig. 1;
**Fig. 12** shows further views of the injection adapter and cap illustrated in Fig. 1, where (a) is a plan view from a bottom side of the injection adapter which corresponds to the outlet side and (b) is side view from a frontal side showing both clipping members of the injection adapter;
**Fig. 13** shows (a) a cross-sectional view taken along an axial direction and (b) a lateral view taking from a side of one of the clipping members of the injection adapter of Fig. 1; and
**Fig. 14** shows a perspective view of an injection adapter including a captive ball according to a further embodiment of the present invention, where a partial cross-section has been cut for illustrative purposes.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

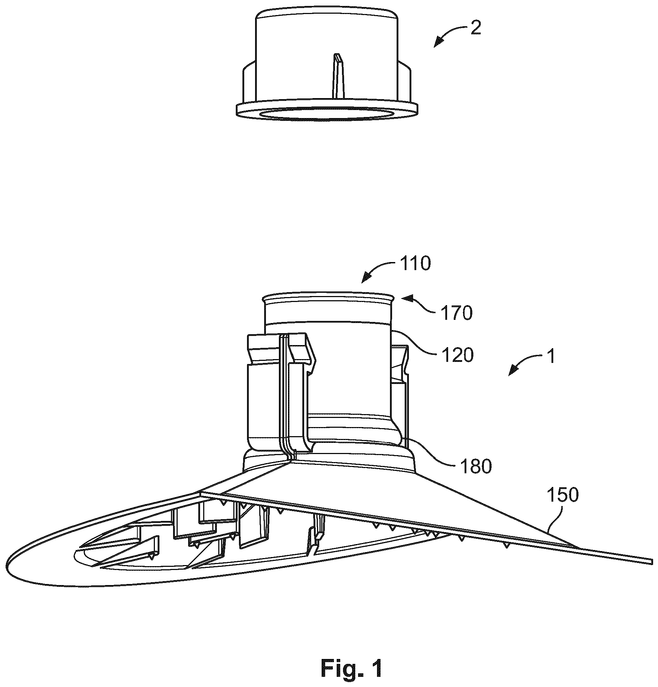

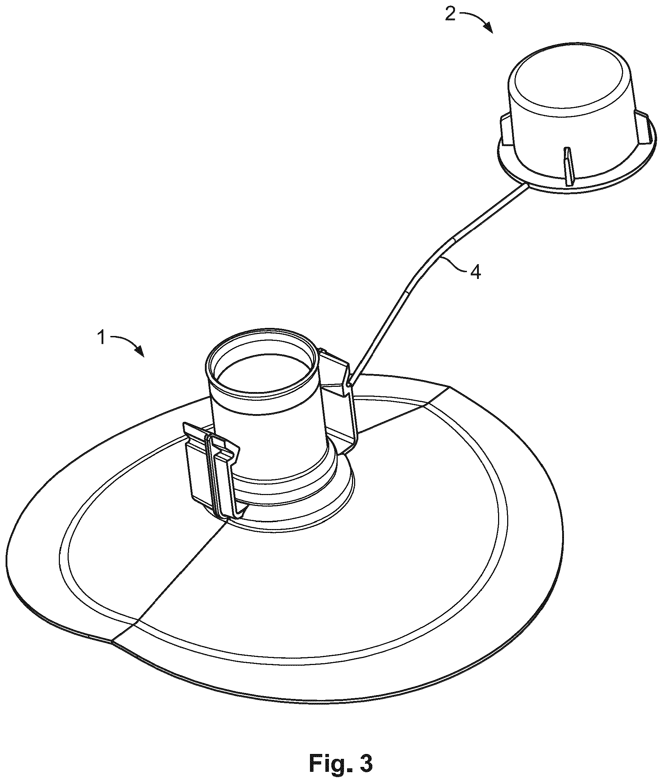

An injection adapter 1 and a respective cap 2 for closing an inlet opening 110 of the injection adapter 1 according to an embodiment of the present invention are illustrated in Fig. 1 of the drawings. The closing cap 2 may be provided as an optional, loose part of the injection adapter 1, as shown in Fig. 1, or connected thereto via a cable or ribbon 4, as illustrated in Fig. 3.

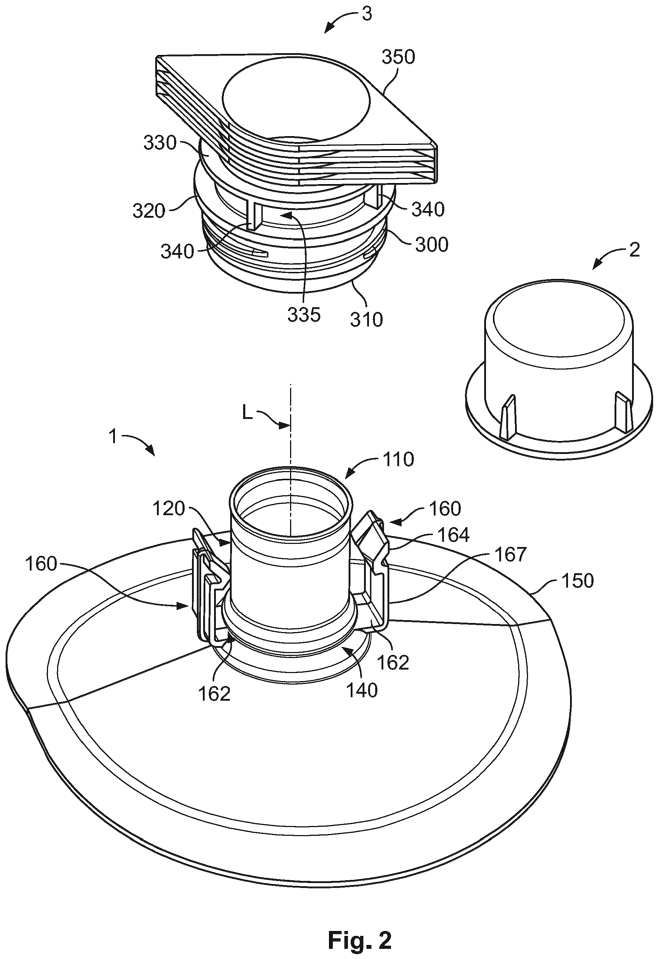

A perspective view of a nozzle or spout 3 of a fluid container (not shown) to be connected to the injection adapter 1 of Fig. 1 for injecting fluid, such as a resin, over or around a cable joint (not shown) to be sealed is shown in Fig. 2. The spout 3 shown in Fig. 2 exemplifies a type of spouts commonly found in commercially available containers of fluid used for insulating/sealing of electrical cable joints, such as disposable resin bags, which normally follow standardized dimensions and present common features among different suppliers. For instance, features commonly shared by known spouts 3 of resin bags include an external screwing thread 300 disposed at a certain distance from the edge or rim 310 of the spout 3 for screwing the cap of the fluid container, a pair of horizontal ribs 320, 330 after the screwing thread 300 and that run around the outer perimeter of the spout 3 in parallel to the spout border 310, and one or more vertical spacers 340 disposed between the horizontal ribs 320, 330 at regular angular spacing for adding mechanical stability to spout 3. In the example of Fig. 2, four vertical spacers 340 are provided at a regular spacing of 90° around the outer perimeter of the spout 3. The structure 350 on the upper part of the spout 3 is used for welding the spout 3 to the respective fluid container (not shown). As the dimensions and structural features of the spout 3 are standardized, several features of the injection adapter 1 may be positioned and dimensioned by reference to the standard dimensions of the spout 3 and therefore, provide an injection adapter 1 that can be flexibly used with fluid containers, such as resin bags, available in the market and provided by different suppliers.

The injection adapter 1 includes a fluid conduit 100 with an inlet opening 110 at the end of an inlet neck or upper end region 120 thereof for connecting to the spout 3. The fluid conduit 100 is preferably a cylindrical tube configured such as to be directly inserted (at least partially) into the spout 3. More specifically, the diameter of the inlet opening 110 and inlet end region 120 may be set such as to directly fit into the inner diameter of the spout 3.

The fluid conduit 100 is preferably a cylindrical tube with a longitudinal axis L and configured such that the outer diameters of the inlet opening 110 and the inlet neck 120 directly fits into the inner diameter of the spout 3.

In addition, the length of inlet end region or inlet neck 120, which is the end region of the fluid conduit 100 that is entirely inserted into the spout 3, may be provided with a relatively long neck such as to contain spills of resin when the spout 3 is disconnected and removed from the injection adapter 1. For instance, the inlet neck 120 may have the same length or longer than the longitudinal length of the spout 3 itself, so that the inlet opening 110 of the fluid conduit 100 may be directly immersed into the resin inside the resin bag 5.

Since the inlet neck 120 is to be fitted into the inner side of the spout 3, which generally has a smooth, non-structured inner wall, the outer wall of the fluid conduit 100 (or at least of the inlet neck 120) does not require any additional features for taking into account the screwing thread 300 and other features normally present in spouts 3 of commercially available resin bags. This allows to provide an injection adapter 1 with a simpler design and which can be connected to different spouts 3, irrespectively from the shape of the spout screwing thread 300, by simply pressing the inlet neck 120 into the spout 3 with a longitudinal movement, as opposed to injection valve designs known from the prior art in which the spout is fitted into the injection valve inlet and/or fixed thereto using its screwing thread.

In addition, the fluid conduit 100 has an outlet opening 130 provided at a lower (outlet) end region 140 of the conduit 100 and from which the resin passed through the injection adapter 1 is injected into a sealing envelope or medium (not shown) arranged around the cable joint to be sealed. Sealing envelopes used for this purpose are well known in the art, and therefore, will not be described here. In order to facilitate the injection of resin into the sealing envelope or medium of the cable joint, the injection adapter 1 may further include a spreading base 150 at the lower extremity 140 of the fluid conduit 100 and which extends outwardly around its outlet opening 130 to increase the outlet cross-section of the injection adapter 1 and spread the resin over an injection area larger than the diameter of the outlet opening 14. The spreading base 150 includes additional features that allow the resin to flow on a larger surface, and therefore, facilitate the injection of resin, as it will be described later.

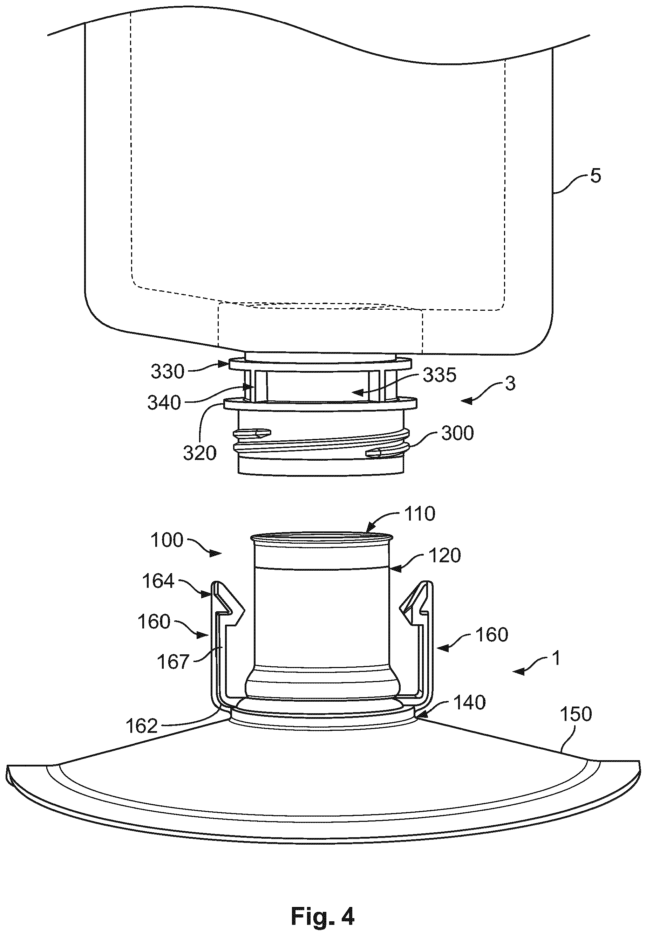

The injection adapter 1 is releasably fixed to the spout 3 by means of a set of clipping members 160, as it will now be described with reference to Figs. 4 - 7.

As shown in Fig. 2, the injection adapter 1 may include a pair of clipping members 160 which are symmetrically distributed around the outer perimeter of the fluid conduit 100, at the outlet end region 140. Each clipping member 160 is configured to engage with one or more recesses existent on the external surface of the spout 3 (or cap 2), such as the recesses defined by horizontal first 320 and seconds ribs 330 provided on the spout 3 of Fig. 2, and simultaneously lock the spout 3 (or cap 2) in position when the inlet neck 120 is directly inserted into the spout 3 (or cap 2) with a single push movement.

The clipping members 160 may be accommodated around an outer perimeter of the fluid conduit 100, at the outlet end region 140, and connected to the fluid conduit 100 solely from its base 162 which projects radially outwards from the fluid conduit 100 at the junction with the spreading base 150. The clipping members 160 may be integrally formed with the injection adapter body (which includes the fluid conduit 100) or manufactured as separate parts that are then fixed or welded to the fluid conduit 100 by means known in the art. In addition, the number of clipping members 160 is not limited to two as in the illustrated embodiment and the injection adapter 1 may include only one or more than two clipping members 160. Furthermore, the clipping members may be distributed around the outer perimeter of the outlet end region 140 in a non-symmetrical manner. The number of clipping members 160 and spacing between them is limited by the number of recesses 335 and vertical spacers 340 in the spout 3 and corresponding spacing between them, respectively. As each clipping member 160 requires actuation from a respective protrusion or vertical spacer 340 in the spout 3 for being unlocked substantially in simultaneous with the other clipping members 160, the number of clipping members 160 may be equal or less than the number of vertical spacers 340.

Each clipping member 160 is designed with an elongated body 163 that extends substantially in parallel to the longitudinal axis L of the fluid conduit 100 from the base 162 and with free ends 164 oriented towards the inlet opening 110 of the injection adapter 1 for gripping the spout 3. The elongated body 163 functions as a cantilever member having sufficient resilience for allowing the clipping member 160 to be deflected radially away from its natural longitudinal orientation (i.e. along the longitudinal axis L of the fluid conduit 100 when the injection adapter 1 is not connected to the spout 3) under an outward pressure applied at its respective free end 164 for locking or unlocking the spout 3 from the injection adapter 1, as illustrated in Figs. 4 - 7.

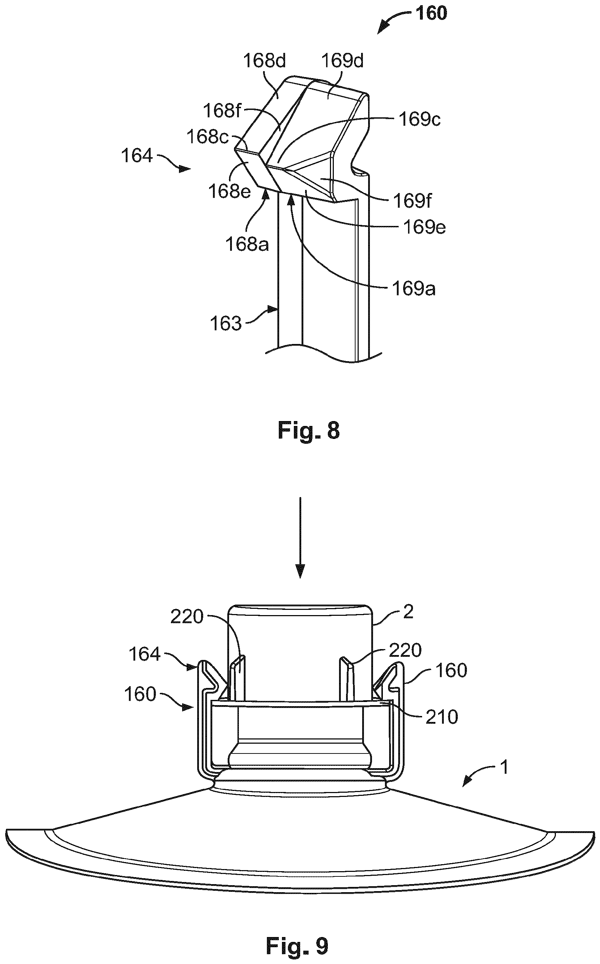

The free end 164 of the clipping member 160 is designed with locking and/or unlocking features that facilitate the locking and/or unlocking of the injection adapter 1 from the spout 3, respectively. For instance, as shown in Fig. 8, the free end 164 may exhibit a double-featured protrusion 165 that projects radially towards the fluid conduit 100 and which is defined by first and second indentations or protrusion parts (168 and 1698) arranged side-by-side and of different shapes for providing differently functionalities, as it will be explained hereinafter.

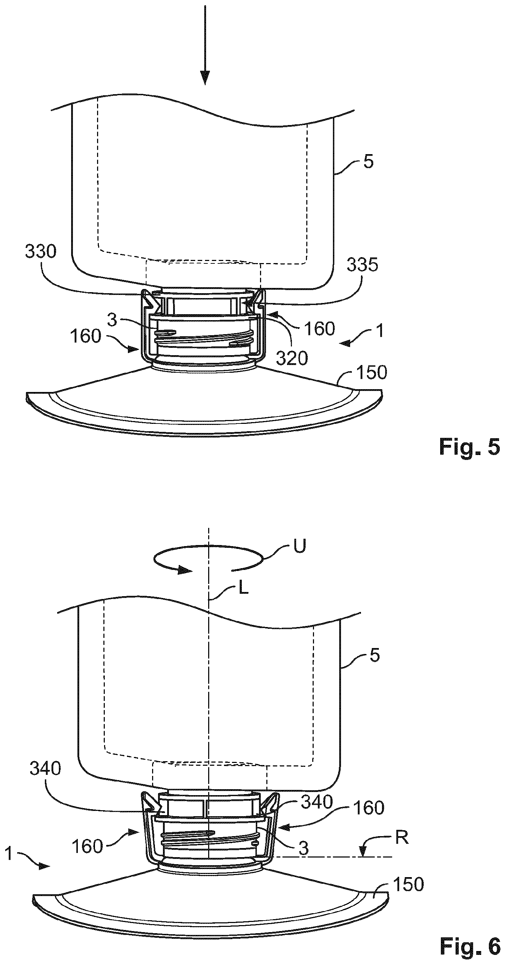

The first protrusion part 168, which serves as the main locking feature of the clipping member 160, is defined by an radial inward shoulder 168a that is followed by a (partial) V-shaped indentation or notch 168b that projects towards the fluid conduit 100 and which is dimensioned such that the shoulder 168a and at least part of the first protrusion part 168 (including the notch apex 168c) can engage into the recess 3335 defined by the first and second ribs 320, 330 of the spout 3, thereby securely fixing the spout 3 and preventing the spout 3 from being accidentally disconnected from the injection adapter 1 by a pull movement. In addition, an upper side face 168d of the V-shaped indentation 168b (i.e. a face that faces the inlet opening 11 and therefore, the spout 3 during insertion) has a non-zero inclination with respect to a plane transverse to the longitudinal axis L of the injection adapter 1 (which substantially coincides with the insertion direction shown by the arrow in Fig. 5 and the longitudinal length of the elongated body 163 of the clipping member 160) such that the border 310 and/or first rib 320 on the outer wall of the spout 3 are brought into contact with the upper side face 168d during insertion of the inlet neck 120 into the spout 3 and gradually apply a downward pressure onto the upper side face 168d of the first protrusion part 168 that causes the respective clipping member 160 to be increasingly deflected outwards. Thus, while gradually sliding downwards along the inlet neck 120, the spout 3 simultaneously applies an outward force on the free end 164 of the clipping member 160 that deflects the clipping member 160 outwards until the notch apex 168c passes over the first rib 320 and may enter into the recess 335 to lock the spout 3, as shown in Fig. 5. The lower side face 168e after the notch apex 168c has exhibits an inclination with respect to the transverse plane that allows for a smooth snapping of the clipping member 160 into the spout recess 335 once the notch apex 168c passes the first rib 320 in the spout 3. The inclination of the lower side face 168e also facilitates removal of the spout 3.

The outward pressure necessary for deflecting each clipping member 160 away from the locked state is applied via the second protrusion part 169 of the double-featured protrusion 165. The second protrusion part 169 acts as an unlocking protrusion that cooperates with a protrusion 340 already present on the spout 3 itself, such as one of the vertical spacers or ribs 340, for unlocking the injection adapter 1 from the spout 3, as it will be described in the following with reference to Figs. 6 - 8.

The second protrusion part 169 is specifically designed with a shape adapted to unlock the spout 3 from the injection adapter 1 with a simple rotation movement of the spout 3 in an unlocking direction U that brings the second protrusion part 169 of the clipping member 160 under actuation of one of the vertical spacers 340 already existent in the spout 3. As mentioned above, the vertical spacers 340 are generally present in spouts of commercially available fluid containers, such as resin bags, for improving the mechanical stability of the spout 3. The present invention uses such vertical spacers 340 as unlocking actuators that can cooperate with the specifically designed second protrusion parts 169 of the clipping members 160 for the different purpose of applying outward pressure onto the respective free ends 164 and consequently, unlock the clipping members 160 and free the spout 3 from the injection adapter 1 in a single step and by simply turning the spout 3 by less than a 360° rotation. For instance, as shown in Fig. 6, when the spout 3 is turned in the direction of the arrow (i.e. in the unlocking direction which corresponds to the counter clockwise direction in Fig. 6), the vertical spacers 340 are brought into contact with the locked double-featured protrusion 164 from the side of the second protrusion part 169 and progressively applies an a force on the second protrusion part 169 along a non-radial direction (i.e. a direction that makes a non-zero angle with a radial direction R of the fluid conduit 100) that causes the respective clipping member 160 to deflect outwards until the respective double-featured protrusion 164 is unlocked from the first rib 320 in the spout 3.

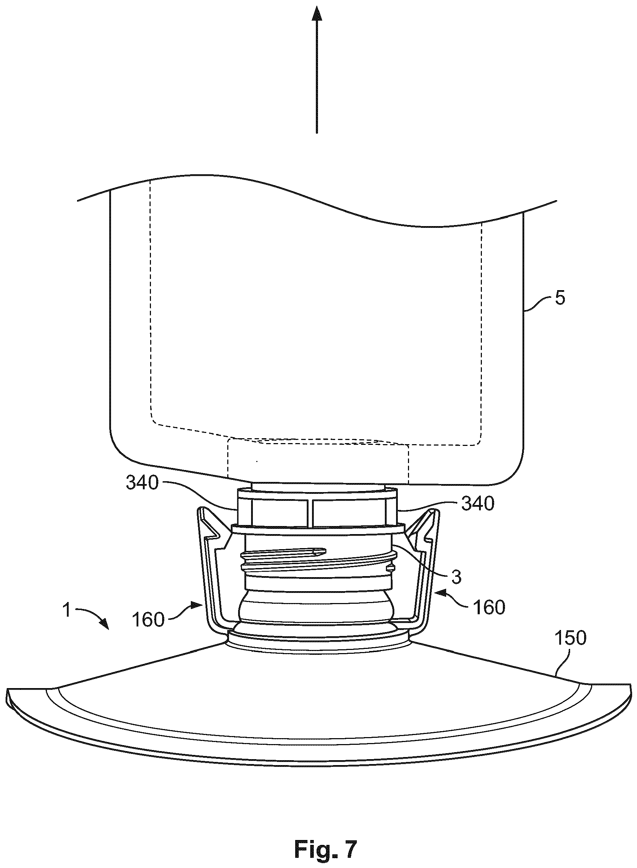

Consequently, each clipping member 160 can be easily unlocked from the spout 3 by turning the spout 3 by, at most, the angular distance between two adjacent vertical spacers 340 in the spout 3. For instance, in the configuration illustrated in Figs. 6 - 7 the spout 3 includes four vertical spacers 340 equally spaced by substantially 90°, so that the maximum rotation necessary for unlocking the spout 3 from the injection adapter 1 is 90° in the counter-clockwise direction. Once the clipping members 160 have been fully deflected (opened) by the vertical spacers 340 and their respective free ends 164 are no longer locked into the spout 3, the spout 3 together with respective resin bag 5 may be easily decoupled from the injection adapter 1 by being simply pulled apart, in a single step, for e.g. with a single pulling movement in the direction of the arrow illustrated in Fig. 7.

In order to achieve this unlocking effect, the unlocking protrusion 169 comprises an oblique face 169f that is inclined with respect to a plane parallel to a longitudinal axis L of the fluid conduit 100 such as to cause the free end 162 of the respective clipping member 160 to be pushed radially outwards under application of mechanical force or pressure on said oblique face 169f along a direction transverse to both the longitudinal direction L and the radial direction R.

Referring to Fig. 8, the second protrusion part 169a provided at the free end 162 may be designed with a shape that includes the oblique face 169f and which cuts partially the edge of a V-shaped indentation or notch 169b that projects towards the fluid conduit 100. This V-indentation is defined by an upper side face 169d and a lower side face 169e that joins the upper side face 169d at the apex 169c of the notch 169b. The oblique face 169f is a triangular face that is oriented with respect to the upper side face 169d and the lower side face 169e as a bezel, cutting partially the edge 169c of the V-shaped indentation 169b. The bezel face 169f allows the double-featured protrusion 165 to cooperate with a vertical spacer 340 of the spout 3 for causing deflection of the respective clipping member 160 when the vertical spacer 340 is brought into contact with the bezel face 169f by turning the spout 3 in the corresponding direction. In particular, as shown in Fig. 6, the bezel face 169f has an inclination angle with respect to the vertical ribs 340 such as to allow a vertical rib 340 to slide along the bezel 169f with a rotation movement in the direction of the arrow and to simultaneously apply a gradually increasing outward force on the bezel face 169f that causes the free end 164 of the respective clipping member 160 to be progressively deflected away from the fluid conduit 100.

The shoulder 169a of the unlocking protrusion 69 may form a common shoulder with the shoulder 168a of the first protrusion part 168, and therefore, also contributes for the locking effect. On the other hand, the upper side face 169d may have a larger inclination than the upper side face 168d of the first protrusion so as to only enter in contact with the rim 310 of the spout 3 at the beginning of the insertion process, and therefore, does not significantly contribute to the deflection of the clipping members 160 during insertion.

In addition, the clipping members 160 are disposed around the fluid conduit 100 with the double protrusions 165 oriented with respect to each other such that the vertical spacers 340 may actuate simultaneously on the unlocking protrusions 169 when the spout 3 is rotated in the unlocking direction, while rotation is blocked by the respective first protrusion parts 168 when rotated in the opposite direction. This prevents the injection adapter 1 and spout 3 from being unlocked unintentionally.

Furthermore, in order to ensure that the rotation of the spout 3 in the unlocking direction is stopped at the right position for unlocking the spout 3, the free end 164 of the clipping member 160 may include a blocking member 168f. The blocking part 168f is preferably located on an adjacent side of the unlocking protrusion 169 and projects inwards (towards the fluid conduit 100) beyond the unlocking protrusion 169 itself such as to come into contact with the spout protrusion 340 and block the spout rotation at the most favourable position for unclipping the spout 3 (unlocking position). The unlocking position corresponds to the position at which the vertical rib(s) 310 on the spout 3 causes a maximum deflection on the clipping member(s) 160 provided around the injection adapted 1. For instance, referring to Fig. 8, the blocking part 168f may be provided by one of the lateral, vertical sides of the locking protrusion 168 adjacent to the unlocking protrusion 169. In this configuration, due to the smaller inclination angle of the upper side face 168d of the locking protrusion 168 with respect to the upper side 169d of the unlocking protrusion 169, the edge 168c projects further towards the fluid conduit 100 than the unlocking edge 169c of the unlocking protrusion 169 itself. Consequently, the lateral side 168f connecting the respective upper sides 168d and 169d of the locking and unlocking protrusions 168 and 169 form a blocking barrier against a movement of the spout vertical rib 310 in the unlocking direction beyond the contact with the unlocking edge 169c. The blocking side 168f thus ensures that the spout rotation is stopped at the position where the vertical rib 340 of the spout 3 is in contact with the unlocking edge 169c, i.e. when the vertical rib 340 causes a maximum deflection on the clipping member 160.

Referring to Fig. 1, the injection adapter 1 may also include a first sealing area 170 provided on the rim of the fluid conduit 100 at the inlet opening 110 to prevent resin from flowing between the spout 3 and the outer wall of the conduit 100 of the injection adapter 1, namely, during the process of inserting the inlet neck 120 into the spout 3. For instance, the first sealing area 170 may be provided as a protuberance located around the rim of the inlet neck 120 and that is integrally formed with the inlet neck 120. Additionally or alternatively, a sealing ring made of a resilient material, such as rubber, may be arranged in the first sealing area 170 to both seal the contact area with the inner wall of the spout 3 and at the same time compensate for small deviations/irregularities between the spout inner diameter and the outer diameter of the inlet neck 120.

In addition, the injection adapter 1 may include a second sealing area 180 provided around the external perimeter of the fluid conduit 100 at the outlet end region 140, preferably at the contact region between the fluid conduit 100 and the rim 310 of the spout 3 when the spout 3 is fully locked to the injection adapter 1, such as to avoid that resin flows to the outside of the injection adapter 1 via the space between the spout 3 and the fluid conduit 100 when pressure is applied to the resin bag to pass resin through the injection adapter 1. In the present embodiment the inlet neck 120 is entirely fitted into the spout 3, and therefore, the second sealing 180 is located at the junction area between the fluid conduit 100 and the spreading base 150. The second sealing area 180 may be provided as a sealing ring arranged around the outer perimeter of the fluid conduit 100 and/ which may be formed integrally with the fluid conduit 100 or provided as a separate, second sealing ring, for e.g. made of rubber. In addition, in order to provide a stronger sealing effect during the process of resin injection, the thickness of the second sealing ring 180 may be larger than that of the first sealing area 170 since the second sealing area 180 comes into contact with the border of the spout 3 only at the end of the process of inserting the injection adapter 1 into the spout 3 and therefore, it does not have to allow space for a relative movement between the fluid conduit 100 and spout 3 during connection/disconnection of the injection adapter 1, as opposed to the first sealing area 170.

In addition, the injection adapter 1 may include a spreading base 150 with additional features for facilitating the spread of resin over the region to be sealed/insulated.

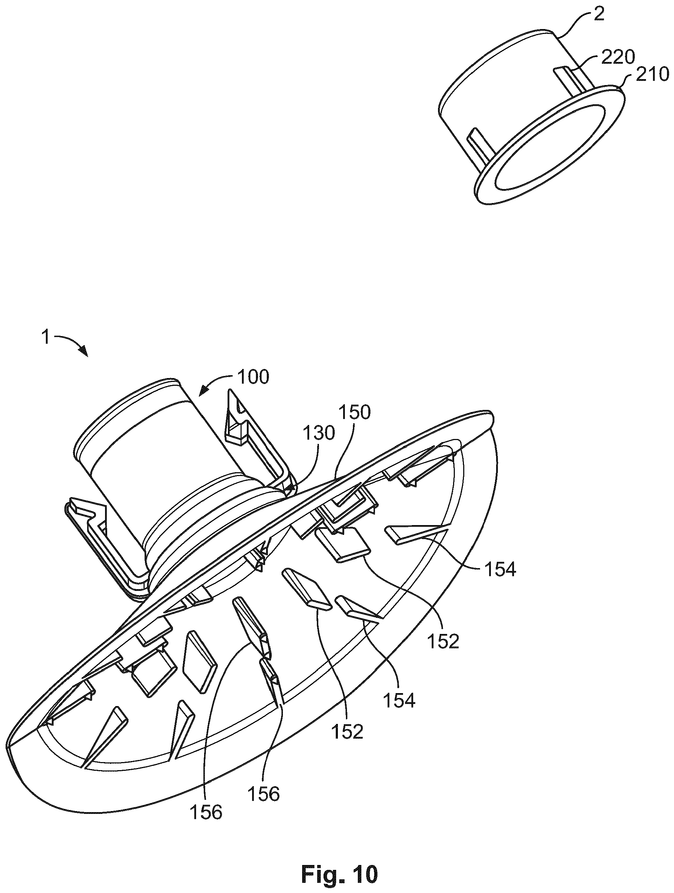

Referring to Fig. 10, the spreading base 150 is connected to the outlet opening 130 of the fluid conduit 100 and extends outwardly around the outlet opening 130 over a spreading area larger than the outlet opening diameter to increase the surface over which the resin output from the outlet opening 130 can be spread. In addition, the spreading base 150 is not flat but rather designed with a conical-like shape about the outlet opening 130 and the longitudinal axis L of the fluid conduit 100, which provides reserve space on the downward side of the spreading base 150 for accumulating resin output via the outlet opening 130 and which is to be spread over the area covered by the spreading base 150.

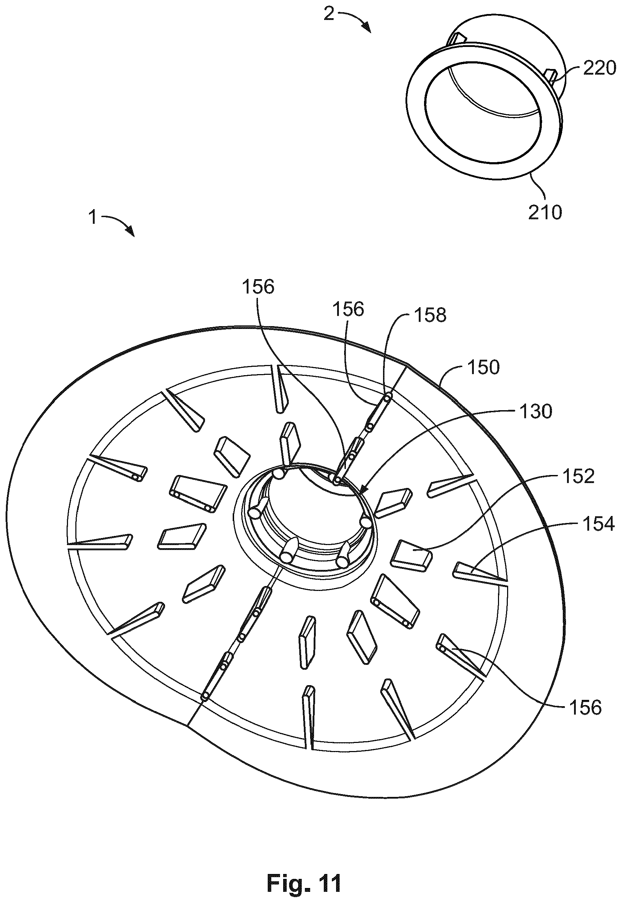

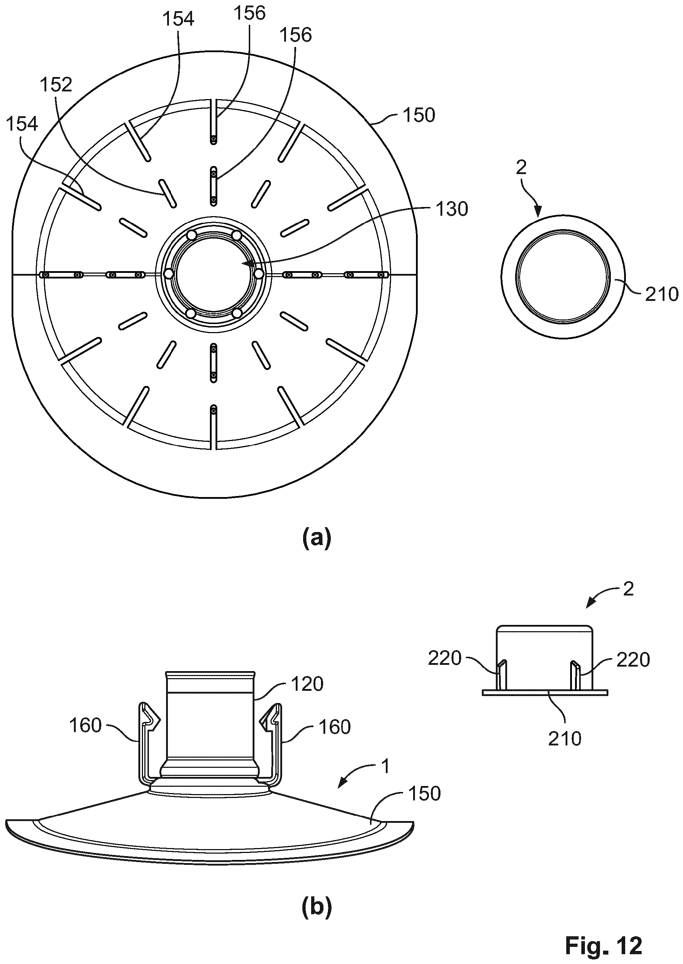

In order to promote the spreading effect of the spreading base 150, the spreading base 150 may be provided with a set of spacers 152, 154 accommodated on the downward side of the base 150 (i.e. on the side connected to the outlet opening 130 that receives the injected resin), as shown in Figs. 10 - 13. These spacers 152, 154 may be provided as vertical bars or legs distributed over the downward side of the spreading base 150. For instance, the spacers 152, 154 may be arranged over one or more circumferential areas that are concentrically arranged with respect to the outlet opening 130 and distributed at substantially equal spacing such as to provide an homogeneous spread of resin. In addition, the shape and dimensions of the spacers 152, 154 depend on their position and radial distance to the centre of the conical-like shape of the spreading base 150. For instance, the height of the spacers 152 located at the inner circumferential region may have a larger height than the spacers 154 located at the outer circumferential region on the spreading base 150 to account for the larger amount of resin accumulated closer to the outlet opening 130 due to the larger height of the conical surface in this region. On the other hand, the height of the spacers 152, 154 may be set such as not to enter into contact with a surface or medium over which the injection adapter 1 may arranged, or at least contact only slightly. In addition, the spacers 152 and 154 may be regularly arranged at the inner and outer circumferential regions and/or aligned along radial lines such as to define spreading channels that facilitate the flow of resin over the entire surface of the spreading base 150. Fluids used in insulating/sealing of electrical cable joints, such as resin, are normally viscous fluids and therefore, difficult to make to flow into the regions to be sealed. The storage space provided by the conical-like shape of the spreading base 150 for accumulating resin during the injection process together the spreading of fluid over the entire downward surface of the spreading base 150 promoted by the spacers 152, 154 facilitates and accelerates the injection process.

The spreading base 150 may also include one or more of the supporting members 156 accommodated on the conical shape region, on the downward side, for providing support and additional mechanical stability to the spreading base 150. Namely, the supporting members 156 avoid that the conical-like shape of the spreading base 150 would be flattened during the injection process due to the pressure applied downwards via the resin bag on the injection adapter 1. Each supporting member 156 may further include one or more supporting pins 158 at the respective bases for keeping a minimum separation between the supporting members 156 and the surface of contact with the injection adapter 1, if needed.

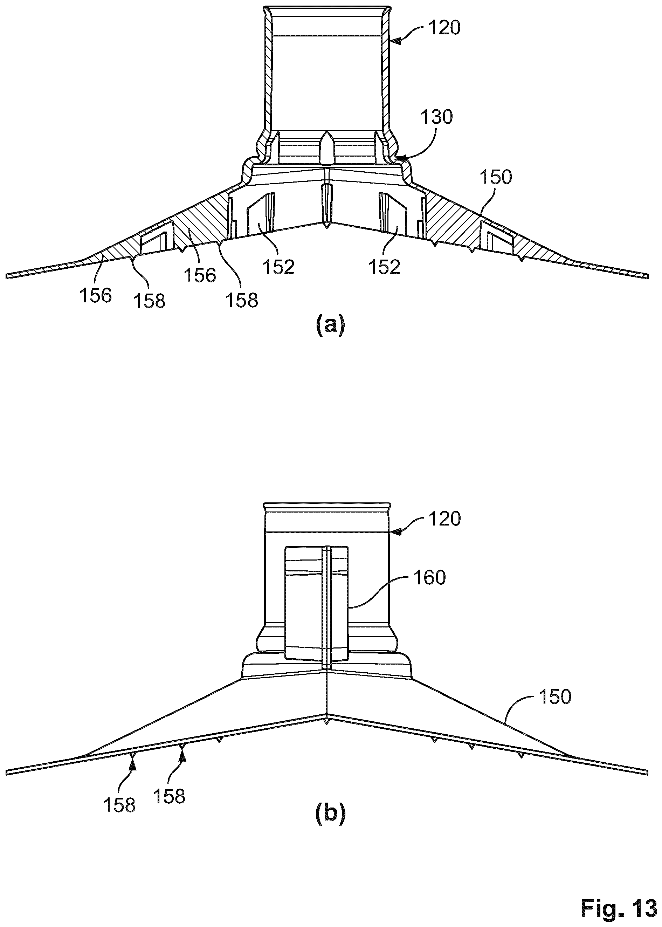

A cross-sectional view of the injection adapter 1 taken across a direction along which the supporting members 156 are arranged on the downward side of the spreading base 150 is shown in Fig. 13(a). Fig. 13(b) is a perspective view of the injection adapter 1 from a side of one of the clipping members 180, and corresponds to the same orientation illustrated in the cross-sectional view of Fig. 13(a).

As mentioned above with reference to Figs. 1 - 3, the injection adapter 1 may be provided with a cap 2 for closing the inlet opening 110 after installation and/or fluid injection and minimize spills of resin remaining in the inlet neck 120. Referring to Fig. 9, the cap 2 may be provided with an outward protruding rim 210 provided around the outer perimeter of the cap 2 and having dimensions matching the features of the clipping members 160 so that the injection adapter 1 may be easily closed by simply pressing the cap 2 against the inlet neck 110 in the direction shown by the arrow in Fig. 9 and until the clipping members 160 lock into the cap rim 210.

In addition, the cap 2 may be simply removed from the injection adapter 1 using an unlocking process similar to the unlocking of the spout 3 described above, by providing protrusions, such as vertical spacers 220, arranged around the outer perimeter of the cap 2, preferably above the rim 210, and spaced apart such as to operate at substantially the same time on the free ends 164 of the clipping members 160. Then, by turning the cap 2 with respect to the injection adapter 1 in the direction that brings the vertical spacers 210 into contact with the adjacent clipping member 160 from the side of the respective second protrusion parts 169, the clipping members 160 are forced to open under the actuation from the vertical spacers 210 and to unlock the cap 2, such as described for the unlocking of the spout 3 with reference to Fig. 6 above. After being unlocked, the cap 2 may then be simply removed from the injection adapter 1 by a pull movement.

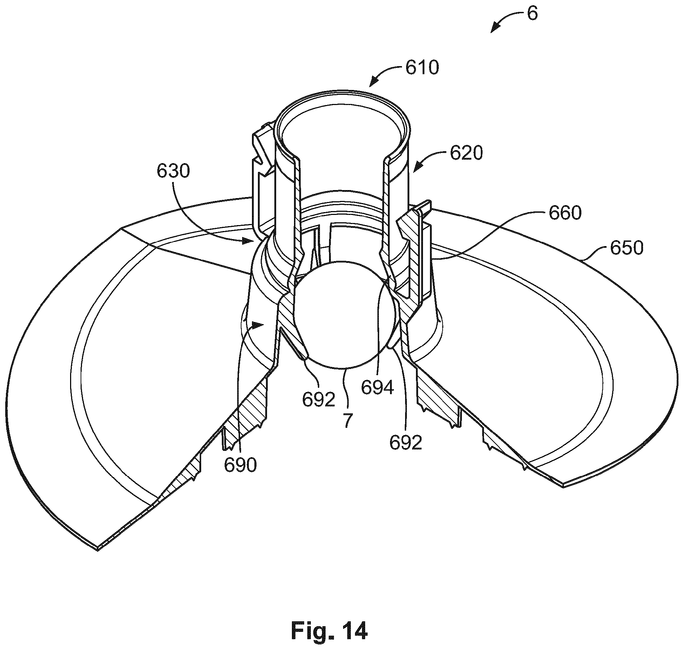

An injection adapter 6 which acts as an injection valve according to a further embodiment of the present invention will now be described with reference to Fig. 14. The injection adapter 6 of Fig. 14 includes features, such as a fluid conduit 600, an inlet neck 610, a spreading base 650 and clipping members 660, which are similar to the corresponding features of the injection adapter 1 described above with reference to Figs. 1 - 13, so that these will not further detailed here.

In addition, the injection adapter 6 essentially differs from the injection adapter 1 by comprising a captive ball 7 kept in a valve compartment 690 provided between the outlet opening 630 of the fluid conduit 600 and the spreading base 650 and which together function as a back-flow valve that prevents back flow of resin into the inlet neck 620 and inlet opening 610 after filling. In this configuration, the clipping members 660 may still be connected at approximately the same distance from the inlet opening 610 as in the injection adapter 1 but are now connected at the junction region between the valve compartment 690 and the outlet opening 630 of the fluid conduit 600. The captive ball 7 is loosely secured inside the valve compartment 690 so that it can be moved between an opened valve position, in which the captive ball 7 rests on supporting legs 692 provided for this effect inside the valve compartment 690 and which allow fluid to pass via the valve compartment 690 to the outlet side, and a closed valve position, in which the captive ball 7 is pressed against an inner rim or inward edge 694 of the valve compartment 690, proximate to the outlet opening 630, thereby closing the outlet opening 630 to prevent the back-flow of resin back into the fluid conduit 600. In this configuration, the injection adapter 1 effectively actuates as an injection valve.

In conclusion, the present invention provides injection adapters and an injection valve that are easily connectable to and disconnectable from spout of disposable fluid containers used in insulation/sealing of electrical cable joints, and which require a minimum number of assembly parts. Moreover, several modifications of the injection adapter 1 may be envisaged. For instance, although the injection adapter 1 was described in the embodiments above as having a tubular fluid conduit and a conical spreading base, the principles of the present invention may be conveniently implemented in injection adapters having a fluid conduit and/or spreading base with other shapes than those illustrated, for e.g. for adapting to a specific application, such as installation site, shape of the spout to be connected, and the like.

Furthermore, it should be noted that the description above assumes that, in Fig. 5, the vertical direction is the direction of the illustrated arrow along which the injection adapter 1 is inserted and locked to the spout 3 of the resin bag 5. However, as it will be readily understood by those skilled in the art, the injection adapter 1 and injection valve 6 of the present invention are not limited to coupling in the vertical direction, and may be coupled to the spout 3 of the resin bag 5, or any suitable fluid container, according to other orientations. For instance, the injection adapter 1 may be coupled to the spout 3 while being aligned with longitudinal axis L in the horizontal direction. Further, the above description also assumes that, in Fig. 6, the direction of rotation for unlocking the spout 3 (unlocking direction) is the counter-clockwise direction indicated by the arrow. However, the claimed invention is not limited to this unlocking direction as this is only defined by the relative orientation of the double-featured protrusion 165 with respect to the vertical spacers 310 on the spout 3.

Furthermore, certain features of the above exemplary embodiments were described using terms such as "top", "bottom", "upper", "upward", and the like. However, these terms were used for the purpose of facilitating the description of the respective features and their relative orientation within the injection adapter and injection valve of the present invention only and should not be construed as limiting the claimed invention or any of its components to use in a particular spatial orientation.

Finally, although the present invention has been described above with reference to injection adapters and valves for injecting fluids that are generally used in insulating or sealing electrical cable joints and connections, the principles of the present invention can also be advantageously applied for injection of other types of viscous fluids, including viscous fluids used for other purposes and/or in a diverse type of applications, such as in chemical industry and biochemical applications.

### Reference Signs

- 1: injection adapter
- 2: cap of injection adapter
- 3: nozzle or spout of resin bag
- 4: cap ribbon
- 5: resin bag
- 6: injection adapter with captive ball
- 7: captive ball

- 100: fluid conduit
- 110: inlet opening
- 120: inlet (upper) end region, inlet neck
- 130: outlet opening
- 140: outlet (lower) end region

- 150: spreading base
- 152, 154: spacers
- 156: supporting members

- 160: clipping members
- 162: base of clipping member
- 163: elongated body of clipping member
- 164: free end of clipping member
- 165: double-featured protrusion
- 168: first protrusion part, locking protrusion
- 168a: shoulder
- 168b: notch
- 168c: notch apex or tip
- 168d: upper side face
- 168e: lower side face
- 168f: blocking part, side
- 169: second protrusion part, unlocking protrusion
- 169a: shoulder
- 169b: notch
- 169c: notch apex
- 169d: upper side face
- 169e: lower side face
- 169f: bezel face
- 170: first sealing area
- 180: second sealing area

- L: longitudinal axis of fluid conduit
- R: radial direction
- U: unlocking direction
- 300: screwing thread of spout
- 310: edge/rim of spout
- 320: first rib of spout
- 330: second rib of spout
- 335: recess
- 340: vertical spacers of spout
- 350: attaching structure of spout

- 600: fluid conduit
- 610: inlet opening
- 620: inlet (upper) end region
- 630: outlet opening
- 640: outlet (lower) end region
- 650: spreading base
- 660: clipping members
- 690: valve compartment
- 692: supporting legs
- 694: inward edge

## Claims

1. Injection adapter for a spout (3) of a fluid container (5) used in sealing and/or insulation of electrical cable joints, the spout (3) having an outer wall with at least one recess (335) and a protrusion (340), the injection adapter comprising:
a fluid conduit (100; 600) having an inlet neck (120; 620) with an inlet opening (110; 610) that is adapted to be inserted into the spout (3); and
one or more clipping members (160; 660) arranged on an outer perimeter of the fluid conduit (100; 600) and oriented with free ends (164; 664) towards the inlet neck (120; 620);
**characterized in that**
said free ends (164; 664) are adapted to lock the fluid conduit (100; 600) to the spout (3), and
the free end (164; 664) of each clipping member (160; 660) is adapted to be deflected outwards in a radial direction when mechanical force is applied on said free end (164; 664) along a non-radial direction for unlocking the respective clipping member (160; 660) from the spout (3), wherein
the free end (164; 664) of each clipping member (160; 660) includes a locking protrusion (168) and an unlocking protrusion (169) that project radially towards the fluid conduit (100; 600),
said locking protrusion (168) being adapted to snap into one of the at least one recess (335) of the spout (3) when the inlet neck (120; 620) is inserted into the spout (3), and
said unlocking protrusion (169) comprises an oblique face (169f) that is inclined with respect to a plane parallel to a longitudinal axis of the fluid conduit (100; 600) such as to cause the free end (164; 664) of the respective clipping member (160; 660) to be pushed radially outwards under application of mechanical force on said oblique face (169f) along a non-radial direction that is transverse to both the longitudinal direction and the radial direction.

2. Injection adapter according to claim 1, wherein
the clipping member (160; 660) has an elongated body (163) extending along the fluid conduit (100; 600) and which terminates with the respective free end (164; 664) at the side towards the inlet opening (110; 610), the elongated body (163) being adapted to be resiliently deflected under application of an outward mechanical force at the respective free end (164; 664).

3. Injection adapter according to claim 1 or 2, wherein
wherein said unlocking protrusion (169) is adapted to cooperate with said protrusion (340) on the spout (3) when the spout protrusion (340) is brought into contact with the free end (164; 664) of the clipping member (160; 660) by a rotation movement of the spout (3) relatively to the inlet neck (120; 620) inserted into the spout (3), thereby unlocking the clipping member (160; 660) from the spout (3).

4. Injection adapter according to any one of claims 1 to 3, wherein
said unlocking protrusion (169a) has a shape that includes said oblique face (169f), an upper side face (169d) which is a face that faces the inlet opening (110) of the fluid conduit (100) and a lower side face (169e) which is inclined with respect to the upper side face such as to define an edge (169d) of a V-shaped indentation (169b) defined by the the upper and the lower side faces (169d, 169e), wherein the V-shaped indentation (169b) projects towards the fluid conduit (100),
wherein said oblique face (169f) is a triangular face oriented with respect to the upper side face (169d) and the lower side face (169e) such as to partially cut the edge (169d) defined by the upper side face (169d) and the lower side face (169); and/or
wherein said free end (164; 664) further includes a blocking part (168f) located on an adjacent side of the unlocking protrusion (169) and which projects inwards beyond the unlocking protrusion (169) such as to come into contact with the spout protrusion (340) during the rotation movement of the spout (3) and to stop the spout (3) rotation at a position at which the spout protrusion (340) causes a maximum deflection on the clipping member (160; 660) to unclip the spout (3).

5. Injection adapter according to any one of claims 1 to 4, wherein
said locking protrusion (168) defines a shoulder that projects radially inwards and which is adapted to engage with the recess (335) in the spout (3) and to prevent removal of the inlet neck (120; 620) from the spout (3) with a pull movement.

6. Injection adapter according to claim 5, wherein
said locking protrusion (168) includes a blocking side (168f) adapted to enter into contact with the spout protrusion (340) during the rotation movement of the spout (3) such as to stop rotation of the spout (3) at a position at which the spout protrusion (340) causes a maximum deflection on the clipping member (160; 660) to unclip the sprout (3).

7. Injection adapter according to claim 5, wherein
said locking protrusion (168) further includes an upper side face (168d) which is inclined with respect to a plane transverse to a longitudinal axis (L) of the fluid conduit (100; 600) such as to cause the free end (164; 664) of the respective clipping member (160; 660) to be deflected outwards under application of mechanical force onto said upper side face (168d) along a direction parallel to said longitudinal axis (L).

8. Injection adapter according to claim 7, wherein
said locking protrusion (168) further includes a lower side face (168e) between the shoulder (168a) and the upper side face (168d), the lower side face (168e) being inclined with respect to the upper side face (168d) such as to form a V-shaped indentation that facilitates the engagement of said locking protrusion (168) into said recess (335) on the spout (3).

9. Injection adapter according to any one of claims 1 to 8, wherein
said locking protrusion (168) is adapted to receive said mechanical force from a border (310) or a rib (320) of the outer wall of the spout (3) during insertion of the inlet neck (120; 620) into the spout (3).

10. Injection adapter according to any one of claims 1 to 9, further comprising:
a spreading base (150; 650) connected to an outlet opening (130; 630) of the fluid conduit (100; 600),
wherein the spreading base (150; 650) extends around the outlet opening (130; 630) over a spreading area larger than a diameter of the outlet opening (130; 630) for spreading the fluid output from the outlet opening (130; 630).

11. Injection adapter according to claim 10, wherein the spreading base (150; 650) has a conical-like shape about the outlet opening (130; 630) to accumulate the fluid output from the outlet opening (130; 630).

12. Injection adapter according to claim 10 or 11, wherein
the spreading base (150; 650) comprises one or more base spacers arranged on a downward side of said spreading base (150; 650) for distributing the fluid output from the outlet opening (130; 630) over the spreading area, and/or
wherein a plurality of base spacers are arranged along two or more linear directions of the spreading base (150; 650) to define one or more spreading channels for the distributing the fluid.

13. Injection adapter according to any one of claims 1 to 12, further comprising:
a first sealing area (170) arranged on a rim of the fluid conduit (100; 600) at the inlet opening (110; 610) and adapted to prevent flow of resin between the spout (3) and an outer wall of the fluid conduit (100; 600); and/or
a second sealing area (180) arranged around an external perimeter of the fluid conduit (100; 600), at a contact region between the fluid conduit (100; 600) and a rim (310) of the spout (3) when the spout (3) is fully locked to the injection adapter, and adapted to prevent flow of resin between the spout (3) and the fluid conduit (100; 600); and/or
a cap adapted to close the inlet opening (110; 610),
wherein the cap includes a rim adapted to be snapped by the free end (164; 664) of each clipping member, and/or
wherein the cap includes one or more protrusions (340) adapted to cooperate with the one or more clipping members (160; 660), each protrusion (340) being adapted to cooperate with the free end (164; 664) of a clipping member (160; 660) and to push said free end (164; 664) radially outwards for releasing the cap when said protrusion (340) is brought into contact with said free end (164; 664) by being rotated in an unlocking direction.

14. Injection adapter according to any one of claims 1 to 13, further comprising:
a valve member adapted to prevent back-flow of fluid through the inlet neck (620) towards the inlet opening (610).

15. Injection adapter according to any one of claims 1 to 14, wherein the valve member comprises:
a valve compartment (690) arranged between the inlet neck (620) and an outlet opening (630) of the fluid conduit (600); and
a captive ball (7) secured inside the valve compartment (690) and adapted to move inside the valve compartment (690) between an opened valve position and a closed vale position;
wherein the valve compartment (690) includes supporting legs (692) adapted to hold the captive ball (7) in the opened valve position when fluid is being injected from the inlet opening (610) and to allow fluid to pass through the supporting legs, and an inward edge (694), proximate to the outlet opening (630), and adapted to hold the captive ball (7) in the closed valve position when the captive ball (7) is pressed against the inward edge (694) and the outlet opening (630) by back-flow of fluid.

## Patentansprüche

1. Einspritzadapter für einen Abfluss (3) eines Fluidbehälters (5) zur Verwendung beim Abdichten und/oder Isolieren elektrischer Kabelverbindungen, wobei der Abfluss (3) eine Außenwand mit mindestens einer Vertiefung (335) und einem Vorsprung (340) aufweist, wobei der Einspritzadapter aufweist:
eine Fluidleitung (100; 600) mit einem Einlassstutzen (120; 620) mit einer Einlassöffnung (110; 610), die zum Einführen in den Abfluss (3) ausgebildet ist; und
ein oder mehrere Klemmelemente (160; 660), die auf einem Außenumfang der Fluidleitung (100; 600) angeordnet und mit freien Enden (164; 664) in Richtung zu dem Einlassstutzen (120; 620) orientiert sind,
**dadurch gekennzeichnet, dass**
die freien Enden (164; 664) ausgebildet sind, die Fluidleitung (100; 600) an dem Abfluss (3) zu verriegeln,
das freie Ende (164; 664) jedes Klemmelements (160; 660) ausgebildet ist, in einer radialen Richtung nach außen umgelenkt zu werden, wenn eine mechanische Kraft auf das freie Ende (164; 664) entlang einer nicht-radialen Richtung einwirkt, um das entsprechende Klemmelement (160; 660) von dem Abfluss (3) zu entriegeln, wobei
das freie Ende (164; 664) jedes Klemmelements (160; 660) einen Verriegelungsvorsprung (168) und einen Entriegelungsvorsprung (169) aufweist, die radial in Richtung zu der Fluidleitung (100; 600) hervorstehen,
der Verriegelungsvorsprung (168) ausgebildet ist, in eine der mindestens einen Vertiefung (335) des Abflusses (3) einzurasten, wenn der Einlassstutzen (120; 620) in den Abfluss (3) eingeschoben wird, und
der Entriegelungsvorsprung (169) eine schräge Fläche (169f) aufweist, die in Bezug auf eine Ebene parallel zu einer Längsachse der Fluidleitung (100; 600) derart geneigt ist, dass bewirkt wird, dass das freie Ende (164; 664) des entsprechenden Klemmelements (160; 660) unter Anwendung einer mechanischen Kraft auf die schräge Fläche (169f) entlang einer nicht-radialen Richtung, die quer sowohl zu der Längsrichtung als auch der radialen Richtung verläuft, radial nach außen gedrückt wird.

2. Einspritzadapter nach Anspruch 1, wobei
das Klemmelement (160; 660) einen länglichen Körper (163) aufweist, der sich entlang der Fluidleitung (100; 600) erstreckt und der mit dem entsprechenden freien Ende (164; 664) an der zu der Einlassöffnung (110; 610) gerichteten Seite mündet, und wobei der längliche Körper (163) ausgebildet ist, elastisch unter Anwendung einer nach außen gerichteten mechanischen Kraft auf das entsprechende freie Ende (164; 664) elastisch umgelenkt zu werden.

3. Einspritzadapter nach Anspruch 1 oder 2, wobei
der Entriegelungsvorsprung (169) ausgebildet ist, mit dem Vorsprung (340) auf dem Abfluss (3) zusammenzuwirken, wenn der Abflussvorsprung (340) mit dem freien Ende (164; 664) des Klemmelements (160; 660) durch eine Drehbewegung des Abflusses (3) relativ zu dem Einlassstutzen (120; 620), der in dem Abfluss (3) eingeführt ist, in Kontakt gebracht wird, wodurch die Verriegelung des Klemmelements (160; 660) mit dem Abfluss (3) gelöst wird.

4. Einspritzadapter nach einem der Ansprüche 1 bis 3, wobei
der Entriegelungsvorsprung (169a) eine Form hat, die die schräge Fläche (169f), eine obere Seitenfläche (169d), die eine Fläche ist, die der Einlassöffnung (110) der Fluidleitung (100) zugewandt ist, und eine untere Seitenfläche (169e) enthält, die in Bezug auf die obere Seitenfläche derart geneigt ist, dass eine Kante (169d) einer V-förmigen Einbuchtung (169b) gebildet wird, die durch die obere und die untere Seitenfläche (169d, 169e) gebildet wird, wobei die V-förmige Einbuchtung (169b) in Richtung zu der Fluidleitung (100) hervorsteht,
die schräge Fläche (169f) eine dreieckige Fläche ist, die in Bezug auf die obere Seitenfläche (169d) und die untere Seitenfläche (169e) derart orientiert ist, dass die durch die obere Seitenfläche (169d) und die untere Seitenfläche (169) gebildete Kante (169d) teilweise geschnitten wird; und/oder
das freie Ende (164; 664) ferner ein Blockierteil (168f) aufweist, das auf einer benachbarten Seite des Entriegelungsvorsprungs (169) angeordnet ist und das nach innen über den Entriegelungsvorsprung (169) hinaus hervorsteht derart, dass es während der Drehbewegung des Abflusses (3) mit dem Abflussvorsprung (340) in Kontakt tritt und die Drehung des Abflusses (3) an einer Position beendet, an der der Abflussvorsprung (340) eine maximale Umlenkung an dem Klemmelement (160; 660) hervorruft, um die Klemmung des Abflusses (3) zu lösen.

5. Einspritzadapter nach einem der Ansprüche 1 bis 4, wobei
der Verriegelungsvorsprung (168) eine Schulter bildet, die radial nach innen hervorsteht und ausgebildet ist, mit der Vertiefung (335) in dem Abfluss (3) in Eingriff zu treten und ein Lösen des Einlassstutzens (120; 620) von dem Abfluss (3) durch eine Ziehbewegung zu verhindern.

6. Einspritzadapter nach Anspruch 5, wobei
der Verriegelungsvorsprung (168) eine Blockierseite (168f) aufweist, die ausgebildet ist, mit dem Abschlussvorsprung (340) während der Drehbewegung des Abflusses (3) derart in Kontakt zu treten, dass eine Drehung des Abflusses (3) an einer Position beendet wird, an der der Abflussvorsprung (340) eine maximale Umlenkung an dem Klemmelement (160; 660) bewirkt, um die Klemmung des Abflusses (3) zu lösen.

7. Einspritzadapter nach Anspruch 5, wobei
der Verriegelungsvorsprung (168) ferner eine obere Seitenfläche (168d) aufweist, die in Bezug auf eine Ebene schräg zu einer Längsachse (L) der Fluidleitung (100; 600) derart geneigt ist, dass bewirkt wird, dass das freie Ende (164; 664) des entsprechenden Klemmelements (160; 660) unter Anwendung einer mechanischen Kraft auf die obere Seitenfläche (168d) entlang einer Richtung parallel zu der Längsachse (L) nach außen umgelenkt wird.

8. Einspritzadapter nach Anspruch 7, wobei
der Verriegelungsvorsprung (168) ferner eine untere Seitenfläche (168e) zwischen der Schulter (168a) und der oberen Seitenfläche (168d) aufweist, wobei die untere Seitenfläche (168e) in Bezug auf die obere Seitenfläche (168d) derart geneigt ist, dass eine V-förmige Einbuchtung gebildet wird, die das Eingreifen des Verriegelungsvorsprungs (168) in die Vertiefung (335) auf dem Abfluss (3) ermöglicht.

9. Einspritzadapter nach einem der Ansprüche 1 bis 8, wobei
der Verriegelungsvorsprung (168) ausgebildet ist, die mechanische Kraft aus einem Rand (310) oder einer Rippe (320) der Außenwand des Abflusses (3) während des Einführens des Einlassstutzens (120; 620) in den Abfluss (3) aufzunehmen.

10. Einspritzadapter nach einem der Ansprüche 1 bis 9, der ferner aufweist:
ein Verteilungsbasiselement (150; 650), das mit einer Auslassöffnung (130; 630) der Fluidleitung (100; 600) verbunden ist,
wobei das Verteilungsbasiselement (150; 650) sich um die Auslassöffnung (130; 630) über eine Verteilungsfläche hinweg erstreckt, die größer als ein Durchmesser der Auslassöffnung (130; 630) ist, um das Ausgabefluid aus der Auslassöffnung (130; 630) zu verteilen.

11. Einspritzadapter nach Anspruch 10, wobei das Verteilungsbasiselement (150; 650) eine konusartige Form um die Auslassöffnung (130; 630) herum hat, um das Ausgabefluid aus der Auslassöffnung (130; 630) zu sammeln.

12. Einspritzadapter nach Anspruch 10 oder 11, wobei
das Verteilungsbasiselement (150; 650) ein oder mehrere Basisabstandselemente aufweist, die auf einer nach unten zeigenden Seite des Verteilungsbasiselements (150; 650) angeordnet sind zur Verteilung des Ausgabefluids aus der Auslassöffnung (130; 630) über die Verteilungsfläche hinweg, und/oder
mehrere Basisabstandselemente entlang zwei oder mehr geradliniger Richtungen des Verteilungsbasiselements (150; 650) derart angeordnet sind, dass ein oder mehrere Verteilungskanäle für die Verteilung des Fluids gebildet werden.

13. Einspritzadapter nach einem der Ansprüche 1 bis 12, der ferner aufweist:
einen ersten Dichtbereich (170), der an einem Rand der Fluidleitung (100; 600) an der Einlassöffnung (110; 610) angeordnet und ausgebildet ist, ein Strömen von Harz zwischen dem Abfluss (3) und einer Außenwand der Fluidleitung (100; 600) zu verhindern; und/oder einen zweiten Dichtbereich (180), der um einen Außenumfang der Fluidleitung (100; 600) an einem Kontaktgebiet zwischen der Fluidleitung (100; 600) und einem Rand (310) des Abflusses (3) herum angeordnet ist, wenn der Abfluss (3) vollständig mit dem Einspritzadapter verriegelt ist, und ausgebildet ist, ein Strömen von Harz zwischen dem Abfluss (3) und der Fluidleitung (100; 600) zu verhindern; und/oder
eine Kappe, die ausgebildet ist, die Einlassöffnung (100; 610) zu verschließen,
wobei die Kappe einen Rand aufweist, der ausgebildet ist, mit dem freien Ende (164; 664) jedes Klemmelements zu verrasten, und/oder
wobei die Kappe einen oder mehrere Vorsprünge (340) aufweist, die ausgebildet sind, mit dem einen oder den mehreren Klemmelementen (160; 660) zusammenzuwirken, wobei jeder Vorsprung (340) ausgebildet ist, mit dem freien Ende (164; 664) eines Klemmelements (160; 660) zusammenzuwirken und das freie Ende (164; 664) zum Loslösen der Kappe radial nach außen zu drücken, wenn der Vorsprung (340) mit dem freien Ende (164; 664) durch Drehung in einer Entriegelungsrichtung in Kontakt gebracht wird.

14. Einspritzadapter nach einem der Ansprüche 1 bis 13, der ferner aufweist:
ein Ventilelement, das ausgebildet ist, eine Rückströmung von Fluid durch den Einlassstutzen (620) in Richtung zu der Einlassöffnung (610) zu verhindern.

15. Einspritzadapter nach einem der Ansprüche 1 bis 14, wobei das Ventilelement aufweist:
eine Ventilkammer (690), die zwischen dem Einlassstutzen (620) und einer Auslassöffnung (630) der Fluidleitung (600) angeordnet ist; und
eine unverlierbare Kugel (7), die im Inneren der Ventilkammer (690) eingeschlossen und ausgebildet ist, sich im Inneren der Ventilkammer (690) zwischen einer offenen Ventilstellung und einer geschlossenen Ventilstellung zu bewegen;
wobei die Ventilkammer (690) Haltebeine (692) aufweist, die ausgebildet sind, die unverlierbare Kugel (7) in der offenen Ventilstellung zu halten, wenn Fluid aus der Einlassöffnung (610) eingespritzt wird und Durchgang des Fluids durch die Haltebeine zu ermöglichen, und ferner eine nach innen zeigende Kante (694) im Bereich der Auslassöffnung (630) aufweist, die ausgebildet ist, die unverlierbare Kugel (7) in der geschlossenen Ventilstellung zu halten, wenn die unverlierbare Kugel (7) gegen die nach innen zeigende Kante (694) und die Auslassöffnung (630) durch die Rückströmung des Fluids gedrückt wird.

## Revendications

1. Adaptateur d'injection pour une goulotte (3) d'un réservoir de fluide (5) utilisé dans l'étanchéification et/ou l'isolation de joints de câbles électriques, la goulotte (3) possédant une paroi externe comportant au moins un évidement (335) et une protubérance (340), l'adaptateur d'injection comprenant :
un conduit de fluide (100 ; 600) comportant un col d'arrivée (120 ; 620) possédant une ouverture d'arrivée (110 ; 610) qui est adaptée pour être insérée dans la goulotte (3), et
un plusieurs éléments d'accrochage (160 ; 660) disposés sur le périmètre externe du conduit de fluide (100 ; 600) et orientés de telle sorte que les extrémités libres (164 ; 664) soient dirigées vers le col d'arrivée (120 ; 620),
**caractérisé en ce que :**
lesdites extrémités libres (164 ; 664) sont conçues pour verrouiller le conduit de fluide (100 ; 600) sur la goulotte (3), et
l'extrémité libre (164 ; 664) de chaque élément d'accrochage (160 ; 660) est conçue pour être infléchie vers l'extérieur dans une direction radiale lorsqu'une force mécanique est appliquée sur ladite extrémité libre (164 ; 664) le long d'une direction non radiale en vue de déverrouiller les éléments respectifs d'accrochage (160 ; 660) de la goulotte (3), où
l'extrémité libre (164 ; 664) de chaque élément d'accrochage (160 ; 660) inclut une protubérance de verrouillage (168) et une protubérance de déverrouillage (169) qui dépassent radialement en direction du conduit de fluide (100 ; 600),
ladite protubérance de verrouillage (168) étant conçue pour s'encliqueter dans l'un parmi le ou les évidements (335) de la goulotte (3) lorsque le col d'arrivée (120 ; 620) est inséré dans la goulotte (3), et
ladite protubérance de déverrouillage (169) comprenant une face oblique (169f) qui est inclinée par rapport à un plan parallèle à l'axe longitudinal du conduit de fluide (100 ; 600) de sorte à amener la poussée radiale de l'extrémité libre (164 ; 664) de l'élément respectif d'accrochage (160 ; 660) vers l'extérieur lors de l'application d'une force mécanique sur ladite face oblique (169f) le long d'une direction non radiale, transversale à la fois à la direction longitudinale et à la direction radiale.

2. Adaptateur d'éjection selon la revendication 1, dans lequel :
l'élément d'accrochage (160 ; 660) possède un corps allongé (163) s'étendant le long du conduit de fluide (100 ; 600) et qui se termine avec l'extrémité libre (164 ; 664) respective du côté situé en direction de l'ouverture d'arrivée (110 ; 610), le corps allongé (163) étant conçu pour être infléchi de manière souple à l'application d'une force mécanique vers l'extérieur au niveau de l'extrémité libre (164 ; 664) respective.

3. Adaptateur d'éjection selon la revendication 1 ou la revendication 2, dans lequel :
ladite protubérance de déverrouillage (169) est conçue pour interagir avec ladite protubérance (340) sur la goulotte (3) lorsque la protubérance de goulotte (340) est mise en contact avec l'extrémité libre (164 ; 664) de l'élément d'accrochage (160 ; 660) par de rotation de la goulotte (3) par rapport au col d'arrivée (120 ; 620) inséré dans la goulotte (3), ce qui déverrouille ainsi l'élément d'accrochage (160 ; 660) de la goulotte (3).

4. Adaptateur d'éjection selon l'une quelconque des revendications 1 à 3, dans lequel :
ladite protubérance de déverrouillage (169a) présente une forme qui inclut ladite face oblique (169f), une face latérale supérieure (169d) qui est une face opposée à l'ouverture d'arrivée (110) du conduit de fluide (100) ainsi qu'une face du côté inférieur (169e) qui est inclinée par rapport à la face du côté supérieur de sorte à définir un bord (169d) d'indentation en forme de V (169b) défini par les faces supérieure et inférieure (169d, 169e), l'indentation forme de V (169b) faisant saillie en direction du conduit de fluide (100),
dans lequel ladite face oblique (169f) est une face triangulaire orientée par rapport à la face supérieure (169d) et à la face inférieure (169e) de sorte à couper partiellement le bord (169d) défini par la face supérieure (169d) et par la face inférieure (169e), et/ou
dans lequel ladite extrémité libre (164 ; 664) inclut en outre un organe de blocage (168f) situé sur un côté adjacent de la protubérance de déverrouillage (169) et qui dépasse vers l'intérieur au-delà de la protubérance de déverrouillage (169) de sorte à venir au contact avec la protubérance de goulotte (340) pendant le mouvement de rotation de la goulotte (3), ainsi qu'à stopper la rotation de la goulotte (3) à une position à laquelle la protubérance de goulotte (340) provoque un infléchissement maximal sur l'élément d'accrochage (160 ; 660) afin de déclipser la goulotte (3).

5. Adaptateur d'éjection selon l'une quelconque des revendications 1 à 4, dans lequel :
ladite protubérance de verrouillage (168) définit un épaulement qui dépasse radialement vers l'intérieur et qui est conçu pour se mettre en prise avec l'évidement (335) dans la goulotte (3) ainsi que pour empêcher l'enlèvement du col d'arrivée (120 ; 620) de la goulotte (3) avec un mouvement d'arrachement.

6. Adaptateur d'éjection selon la revendication 5, dans lequel :
ladite protubérance de verrouillage (168) inclut un flanc de blocage (168f) conçu pour entrer en contact avec la protubérance de goulotte (340) pendant le mouvement de rotation de la goulotte (3) de sorte à stopper la rotation de la goulotte (3) à une position à laquelle la protubérance de goulotte (340) provoque un infléchissement maximal sur l'élément d'accrochage (160 ; 660) dans le but de déclipser la goulotte (3).

7. Adaptateur d'éjection selon la revendication 5, dans lequel :
ladite protubérance de verrouillage (168) inclut en outre une face de côté supérieur (168d) qui est inclinée par rapport à un plan transversal à l'axe longitudinal (L) du conduit de fluide (100 ; 600) de sorte à amener l'infléchissement vers l'extérieur de l'extrémité libre (164 ; 664) de l'élément respectif d'accrochage (160 ; 660) lors de l'application d'une force mécanique sur ladite face de côté supérieur (168d) le long d'une direction parallèle au dit axe longitudinal (L).

8. Adaptateur d'éjection selon la revendication 7, dans lequel :
ladite protubérance de verrouillage (168) inclut en outre une face de côté inférieur (168e) entre l'épaulement (168a) et la face de côté supérieur (168d), la face de côté inférieur (168e) étant inclinée par rapport à la face de côté supérieur (168d) de sorte à former une indentation en forme de V qui facilite la mise en prise de ladite protubérance de verrouillage (168) dans ledit évidement (335) sur la goulotte (3).

9. Adaptateur d'éjection selon l'une quelconque des revendications 1 à 8, dans lequel :
ladite protubérance de verrouillage (168) est conçue pour accepter ladite force mécanique en provenance d'un bord (310) ou d'une nervure (320) de la paroi externe de la goulotte (3) pendant l'insertion du col d'arrivée (120 ; 620) dans la goulotte (3).

10. Adaptateur d'éjection selon l'une quelconque des revendications 1 à 9, comprenant en outre :
une base de dispersion (150 ; 650) reliée à une ouverture de sortie (130 ; 630) du conduit de fluide (100 ; 600),
dans lequel la base de dispersion (150 ; 650) s'étend autour de l'ouverture de sortie (130 ; 630) de dispersion plus grande que le diamètre de l'ouverture de sortie (130 ; 630) pour diffuser le fluide délivré en sortie de l'ouverture de sortie (130 ; 630).

11. Adaptateur d'éjection selon la revendication 10, dans lequel la base de dispersion (150 ; 650) présente une forme de type conique autour de l'ouverture de sortie (130 ; 630) dans le but d'accumuler le fluide délivré en sortie de l'ouverture de sortie (130 ; 630).

12. Adaptateur d'éjection selon la revendication 10 ou la revendication 11, dans lequel :
la base de dispersion (150 ; 650) comprend une ou plusieurs entretoises de base disposées à l'aval de ladite base de dispersion (150 ; 650) afin de répartir le fluide en sortie de l'ouverture de sortie (130 ; 630) sur la zone de dispersion, et/ou
dans lequel diverses entretoises de base sont disposées le long de deux directions linéaires ou plus de la base de dispersion (150 ; 650) pour définir un ou plusieurs canaux de dispersion pour la répartition du fluide.

13. Adaptateur d'éjection selon l'une quelconque des revendications 1 à 12, comprenant en outre :
une première zone d'étanchéification (170) disposée sur une couronne du conduit de fluide (100 ; 600) au niveau de l'ouverture d'arrivée (110 ; 610) et conçue pour empêcher un écoulement de résine entre la goulotte (3) et la paroi externe du conduit de fluide (100 ; 600), et/ou
une seconde zone d'étanchéification (180) disposée autour du périmètre externe du conduit de fluide (100 ; 600) au niveau d'une zone de contact entre le conduit de fluide (100 ; 600) et une couronne (310) de la goulotte (3) lorsque la goulotte (3) est totalement verrouillée sur l'adaptateur d'injection, et conçue pour empêcher un écoulement de résine entre la goulotte (3) et le conduit de fluide (100 ; 600), et/ou
une coiffe conçue pour fermer l'ouverture d'arrivée (110 ; 610),
où la coiffe inclut une couronne conçue pour être encliquetée avec l'extrémité libre (164 ; 664) de chaque élément d'accrochage, et/ou
où la coiffe inclut une ou plusieurs protubérances (340) conçues pour interagir avec le ou les éléments d'accrochage (160 ; 660), chaque protubérance (340) étant conçue pour interagir avec l'extrémité libre (164 ; 664) d'un élément d'accrochage (160 ; 660) et pour pousser ladite extrémité libre (164 ; 664) radialement vers l'extérieur afin de libérer la coiffe lorsque ladite protubérance (340) est mise en contact avec ladite extrémité libre (164 ; 664) grâce à une rotation dans un sens de déverrouillage.

14. Adaptateur d'éjection selon l'une quelconque des revendications 1 à 13, comprenant en outre :
un élément de clapet conçu pour empêcher un refoulement de fluide au travers du col d'arrivée (620) en direction de l'ouverture d'arrivée (610).

15. Adaptateur d'éjection selon l'une quelconque des revendications 1 à 14, dans lequel l'élément de clapet comprend :
un compartiment de clapet (690) disposé entre le col d'arrivée (620) et l'ouverture de sortie (130) du conduit de fluide (600), et
une bille captive (7) immobilisée à l'intérieur du compartiment de clapet (690) et conçue pour se déplacer à l'intérieur du compartiment de clapet (690) entre une position de clapet ouvert et une position de clapet fermé,
dans lequel le compartiment de clapet (690) inclut des montants de support (692) conçus pour maintenir la bille captive (7) en position de clapet ouvert lorsque le fluide est injecté depuis l'ouverture d'arrivée (110) et pour permettre le passage du fluide au travers des montants de support, ainsi qu'une bordure dirigée vers l'intérieur (694), proche de l'ouverture de sortie (630) et conçue pour maintenir la bille captive (7) en position de clapet fermé lorsque la bille captive (7) est pressée contre la bordure vers l'intérieur (694) et l'ouverture de sortie (630) en raison du refoulement de fluide.
